(19) Europäisches Patentamt
European Patent Office
Office européen des brevets

(11) **EP 4 531 480 A1**

(12) **EUROPEAN PATENT APPLICATION**

(43) Date of publication:
**02.04.2025 Bulletin 2025/14**

(21) Application number: **24202728.2**

(22) Date of filing: **26.09.2024**

(51) International Patent Classification (IPC):
**H04W 72/543** (2023.01)     **H04W 72/563** (2023.01)
**H04W 72/566** (2023.01)

(52) Cooperative Patent Classification (CPC):
**H04W 72/563; H04W 72/543; H04W 72/569**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 FI 20236073**

(71) Applicant: **Nokia Solutions and Networks Oy
02610 Espoo (FI)**

(72) Inventors:
• **PARIS, Stefano
92170 Vanves (FR)**

• **PAYMARD, Pouria
9000 Aalborg (DK)**
• **PEDERSEN, Klaus Ingemann
9000 Aalborg (DK)**
• **AMIRI, Abolfazl
9220 Aalborg (DK)**
• **KOLDING, Troels Emil
9270 Klarup (DK)**
• **SANCHEZ MOYA, Fernando
54-130 Wroclaw (PL)**

(74) Representative: **MERH-IP Matias Erny Reichl
Hoffmann
Patentanwälte PartG mbB
Paul-Heyse-Straße 29
80336 München (DE)**

(54) **APPARATUS AND METHOD FOR SCHEDULING USER DEVICES IN A RADIO ACCESS NETWORK**

(57)     A scheduling method for use in a radio access network is proposed to allocate frequency resources to a user device for the transmission of data units organized in a set of data units. The sets of data units are assigned an initial transmission delay budget which decreases over time. The scheduling method comprises at a given transmission time:

- prioritizing scheduling the user device with the largest portion of data units already successfully transmitted within the set of data units, and
- prioritizing scheduling the user device which set of data units has the smallest remaining transmission delay budget.

FIG.2

**Description**

TECHNICAL FIELD

Various example embodiments relate generally to apparatus and methods for scheduling user devices in a radio access network.

BACKGROUND

As cellular technology evolves, network functions grow in ability, sophistication and performance. This progress allows for the deployment of new applications particularly multimedia services, for example extended reality (XR). Such applications have strict quality-of-service (QoS) requirements.

Optimal allocation of frequency resources in the radio access network (RAN) to simultaneously satisfy such quality-of-service requirements and at the same time optimize network capacity is a very challenging problem.

3GPP has completed a study on media services and extended reality and has specified enhancements to better support such services in 5G systems. Particularly, release 18 of the 3GPP TS 23.501 introduces the concept of set of data units referred to as PDU Set. A PDU Set is defined as comprising one or more data units carrying the payload of one unit of information generated at the application level. For example, for an extended reality service, a PDU Set corresponds to a video frame or a video slice. Quality-of-service parameters have also been defined at the level of the PDU Set with the intention to provide valuable information for a RAN scheduler to schedule user devices more optimally, resulting in higher system capacity.

The quality-of-service parameters currently defined in 3GPP TS 23.501 are the following: PDU Set Delay Budget (PSDB), PDU Set Error Rate (PSER), PDU Set Integrated Handling Information (PSIHI).

The PSDB QoS parameter defines an upper bound for the delay that a PDU Set may experience for the transfer between a user equipment (UE) and a user plane function (UPF) in a core network, i.e. the duration between the reception time of the first PDU in the PDU Set (at the UPF for downlink transmissions or at the UE for uplink transmissions) and the time when all PDU of the PDU Set have been successfully received (at the UE for downlink transmissions or at the UPF for uplink transmissions). PSDB applies to the downlink PDU Sets received by the by the UPF, and to the uplink PDU Sets sent by the UE.

The PSER QoS parameter defines an upper bound for the rate of PDU Sets that have been processed by a sender of a link layer protocol (e.g. RLC - Radio Link Control protocol in a 3GPP radio access network) but that are not successfully delivered by the corresponding receiver to the upper layer protocol (e.g. PDCP - Packet Data Convergence Protocol in a 3GPP radio access network). Thus, the PSER defines an upper bound for a rate of non-congestion related losses of PDU Sets. The purpose of the PSER is to allow for appropriate link layer protocol configurations, for example appropriate configurations of the Radio Link Control (RLC) and the Hybrid Automatic Repeat Request protocol (HARQ).

The PSIHI QoS parameter indicates whether all PDUs of a PDU Set are needed for the usage of the PDU Set by the application layer in the receiver. PSIHI is an optional parameter.

All PDUs in a PDU Set must be served within the given transmission delay budget (PSDB) and the given error rate (PSER) for the PDU Set to be successfully transmitted.

Providing a simple and efficient scheduling method to achieve this goal is still the subject of research.

SUMMARY

According to some aspects, there is provided the subject matter of the independent claims. Some further aspects are defined in the dependent claims.

According to a first aspect, a scheduling method is disclosed for use in a radio access network to allocate frequency resources to a user device for the transmission of data units organized in a set of data units, the set of data units being assigned an initial transmission delay budget which decreases over time. The proposed scheduling method comprises at a given transmission time: prioritizing scheduling the user device with the largest portion of data units already successfully transmitted within the set of data units, and prioritizing scheduling the user device which set of data units has the smallest remaining transmission delay budget.

According to a second aspect, an apparatus is disclosed for use in a radio access network, the apparatus comprising a scheduler for allocating frequency resources to a user device within a group of user devices, for the transmission of data units organized in a set of data units, the set of data units being assigned an initial transmission delay budget which decreases over time, the scheduler being configured to perform, at a given transmission time: prioritizing scheduling the user device with the largest portion of data units already successfully transmitted within the set of data units, and prioritizing scheduling the user device which set of data units has the smallest remaining transmission delay budget.

In a first embodiment, the scheduling method comprises, or the scheduler is configured to, de-prioritizing scheduling a user device for a given set of data units when there is no remaining transmission delay budget for said given set of data units.

In a second embodiment of the scheduling method, or of the apparatus, said prioritizing is implemented after retransmission has been scheduled.

In a third embodiment, the scheduling method comprises, or the scheduler is configured to, scheduling user devices generating traffic without quality-of-service requirements after said prioritizing.

In a fourth embodiment of the scheduling method, or of the apparatus, said prioritizing is based on calculating a priority metric at the given transmission time for user devices in a group of user devices, wherein the priority metric is calculated, for a given set of data units of a given user device, as a growing function of the number of bits successfully transmitted over the total number of bits to be transmitted in the given set of data units, and a decreasing function of the remaining transmission delay budget assigned to the given set of data units. In an embodiment, the priority metric is reduced when scheduling a user device for a given set of data units is de-prioritized. For example, the priority metric is set to zero when priority metric is reduced.

In another embodiment of the scheduling method and the apparatus as disclosed herein, the set of data units is also assigned an indicator of whether all data units of the set of data units need to be successfully transmitted for usage of the set of data units by an application at a receiver side, and said indicator is taken into account in said prioritizing.

The scheduling method disclosed herein may be carried out by a base station comprising means for executing the method. The means may include circuitry configured to perform one or more or all steps of the scheduling method. The circuitry may be dedicated circuitry. The means may also include at least one processor and at least one memory including computer program code, wherein the at least one memory and the computer program code are configured to, with the at least one processor, cause the base station to perform one or more or all steps of the scheduling method as disclosed herein.

According to another aspect, a computer program is disclosed comprising a set of instructions which, when executed on an apparatus, or a base station, causes the apparatus or the base station, to carry out the scheduling method as disclosed herein.

According to an embodiment the disclosed computer program is embodied as a computer readable medium or directly loadable into a computer. In an embodiment the computer readable medium is a non-transitory medium. The term non-transitory, as used herein, is a limitation of the medium itself (i.e., tangible, not a signal) as opposed to a limitation on data storage persistency (e.g., RAM vs. ROM).

BRIEF DESCRIPTION OF THE DRAWINGS

Example embodiments will become more fully understood from the detailed description given herein below and the accompanying drawings, which are given by way of illustration only and thus are not limiting of this disclosure.

FIG.1 is a block diagram explaining the main parameters used for scheduling a user device for the transmission of a set of data units.

FIG.2 is flowchart of an exemplary embodiment of a scheduling method as disclosed herein.

FIG.3 is a schematic representation of an exemplary embodiment of an apparatus comprising a scheduler as disclosed herein.

DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

At the physical layer interface between a base station and a user device in a radio access network, the resource is shared in time and frequency. The decision to schedule or not a user device takes the form of deciding whether in a time slot $s$ a frequency resource p is allocated to a user device $k$. For example, in a 5G RAN, the scheduling decision is made at the level of Physical Resource Blocks (PRBs) where a PRB is a block of subcarriers.

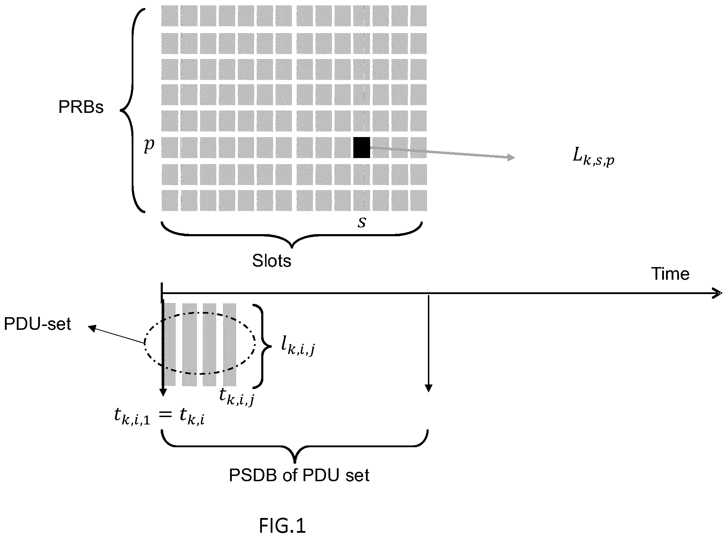

FIG. 1 illustrates the main parameters involved in scheduling user devices in a radio access network. $\mathcal{K}$, $\mathcal{I}$, and $\mathcal{J}$, respectively are the sets of user devices, sets of data units, and data units. Therefore, $k \in \mathcal{K}$, $i \in \mathcal{I}$, and $j \in \mathcal{J}$ identify the k-th user device, the i-th set of data units, and the j-th data unit.

The size of a data unit $j \in \mathcal{J}_i$ in a set of data units $i \in \mathcal{I}_k$ of a user device $k$ is denoted as $l_{k,i,j}$. The data bits that can be transmitted over a frequency resource $p$ in a slot $s$ for the user device $k$ are denoted by $L_{k,s,p}$.

For downlink transmission, the data unit $j \in \mathcal{J}_i$ in the set of data units $i \in \mathcal{I}_k$ of the user device $k$ arrives at time $t_{k,i,j}$ in the base station buffer while the arrival time for the whole set of data units $i$ is $t_{k,i} = t_{k,i,1}$. The set of data units $i \in \mathcal{I}_k$ of the user device $k$ is generated in an application server e.g. an extended reality application server at the same time $t'_{k,i} = t'_{k,i,1} = \cdots = t'_{k,i,|\mathcal{J}_i|}$, but each data unit $j \in \mathcal{J}_i$ in the set of data units $i \in \mathcal{I}_k$ of the user device $k$ may arrive at different time instants (i.e., $t_{k,i,j} \neq t_{k,i,h}$, $j \in \mathcal{J}_i$ and $h \in \mathcal{J}_i$) in the buffer of the base station (for downlink transmission) or the buffer of the user device (for uplink transmission). $D^0_{k,i}$ is the initial transmission delay budget assigned to the set of data units $i$ of the user device $k$. It decreases over time. At current time $t$ the remaining transmission delay budget for the set of data units $i$ of user device $k$ is defined as:

$$D_{k,i}{}^t = D^0_{k,i} - T_{k,i} = D^0_{k,i} - t + t_{k,i}$$

All data units of a set of data units $i$ of a user device $k$ must be served within the transmission delay budget $D_{k,i}{}^0$. Otherwise, the whole set of data units $i$ of a user device $k$ is considered lost (i.e., it becomes useless for the application).

The overall objective of the scheduling method is to maximize the number of successfully delivered sets of data units generated by all user devices in the radio access network within their respective initial transmission delay budgets $D^0_{k,i}$.

The scheduling method disclosed herein is sets-aware and uses QoS parameters and assistance information to prioritize scheduling user devices in the radio access network at a given transmission time based on at least the following rules:

- prioritizing scheduling the user device with the largest portion of data units already successfully transmitted within the set of data units, and
- prioritizing scheduling the user device which set of data units has the smallest remaining transmission delay budget.

For example, a priority metric $m_{k,i}$ is calculated at a transmission time $t$, for each set of data units $i$ of each user device $k$, and scheduling user devices is prioritized based on the priority metrics.

This priority metric $m_{k,i}$ changes over time and takes into account QoS parameters, for example the transmission delay budget, and assistance information, for example the size of the set of data units $i$, the number of bits already transmitted in the set of data units $i$, the remaining transmission delay budget etc...

This approach has a low complexity as, at each transmission time, the scheduler needs only to update the priority metric $m_{k,i}$, to sort the user devices based on their respective priority metric, and to assign the frequency resources accordingly.

For example the priority metric $m_{k,i}$ is calculated as :

- a growing function of the number of bits successfully transmitted over the total number of bits to be transmitted in a given set of data units, and
- a decreasing function of the remaining transmission delay budget assigned to the given set of data units.

A first example of priority metric can be written as :

$$m_{k,i} = \frac{\alpha_{k,i}}{\beta_{k,i}} \times u[D^0_{k,i} - T_{k,i}]$$

The first parameter $\alpha_{k,i}$ represents the ratio of the transmitted bits of the set of data units $i$ of user device $k$ over the total number of bits to be transmitted (i.e. the size of the set of data units). It is expressed as follows:

$$\alpha_{k,i} = \frac{w_{k,i}}{l_{k,i}}, \qquad \alpha_{k,i} \in [0, 1]$$

where $w_{k,i}$ and $l_{k,i}$ represent the successfully transmitted bits and the size of set of data units $i$ of the user device $k$, respectively.

The second parameter $\beta_{k,i}$ represents the ratio of the remaining transmission delay budget over the initial transmission delay budget of set of data units $i$ of the user device $k$. It is expressed as follows:

$$\beta_{k,i} = \frac{D^t_{k,i}}{D^0_{k,i}}, \qquad \beta_{k,i} \in [0, 1]$$

$\alpha_{k,i}$ allows prioritizing the scheduling of an entire set of data units of a user device across multiple consecutive transmissions.

$\beta_{k,i}$ accounts for the buffering time of the set of data units rather than solely focusing on the delay and the transmission delay budget of individual data units.

$\alpha_{k,i}$ and $\beta_{k,i}$ are normalized to take values between 0 and 1 so that it is possible to compare user devices with different quality-of-service requirements.

$u[D^0_{k,i} - T_{k,i}]$ expresses the step function to deprioritize scheduling the set of data units $i$ of the user device $k$ when $T_{k,i}$ exceeds the initial transmission delay budget $D^0_{k,i}$.

The objective is to prioritize user devices which have the highest chance to be satisfied within the remaining transmission delay budget. As time goes and the remaining transmission budget decreases for a given user device $k$, the more data units have been successfully transmitted in proportion of the total number of data units in the set of data units, the highest chance of being able to transmit the entire set of data units within the remaining transmission delay budget.

When the second parameter $\beta_{k,i}$ increases, the priority metrics decreases. When the first parameter $\alpha_{k,i}$ increases, the priority metric increases. For a same value of the second parameter $\beta_{k,i}$, the first parameter decides which user device shall be given priority.

When the initial transmission budget is exceeded, data units are considered lost. There is no point in prioritizing the user device $k$ any longer. If there are enough resources though, the corresponding data units can still be transmitted in a best effort way since the application can still benefit from receiving those data units.

In second example, instead of using direct values of $\alpha_{k,i}$ and $\beta_{k,i}$, the scheduler can use any other function of these two values such as $h(\alpha_{k,i})$ and $g(\beta_{k,i})$, where $h(.)$ and $g(.)$ are arbitrary increasing functions such as exponential (e.g., $\dfrac{e^{\alpha_{k,i}}}{\beta_{k,i}}$ ), logarithmic, etc.

In a third example, one can substitute the number of transmitted bits of a set of data units ($w_{k,i}$) with the number of buffered bits of the set of data units and the remaining transmission delay budget of a set of data units ( $D_{k,i}^t$ ) with the buffer delay, to obtain two parameters $\alpha'_{k,i}$ and $\beta'_{k,i}$ where $\alpha'_{k,i} = 1 - \alpha_{k,i}$ and $\beta'_{k,i} = 1 - \beta_{k,i}$ (or equivalently $\dfrac{t - t_{k,i}}{D_{k,i}^0}$ . The buffer delay of the set of data units $i$ is the time that passed since the time the set of data units entered the buffer of the base station (i.e. $t - t_{k,i}$).

Subsequently, the metric can be reformulated as $m_{k,i} = \dfrac{h(\beta'_{k,i})}{g(\alpha'_{k,i})} \times u\left[D_{k,i}^0 - T_{k,i}\right]$ or

$$m_{k,i} = \frac{\beta'_{k,i}}{\alpha'_{k,i}} \times u\left[D_{k,i}^0 - T_{k,i}\right]$$

In another example, the disclosed metric $m_{k,i}$ can be combined with other metrics using an appropriate function, including various fairness criteria or radio awareness. One example is to combine the above metric $m_{k,i}$ with a proportional fairness (PF) metric

$$\hat{m}_{k,i} = f\left(m_{k,i}, PF_k\right),$$

where $\hat{m}_{k,i}$ is the combined metric, and $f(.)$ is an appropriate function to weight the elements according to the objectives. Examples of function $f(.)$ include a linear combination $f(m_{k,i}, PF_k) = z_1 m_{k,i} + z_2 PF_k$, or convex combination $f(m_{k,i}, PF_k) = \rho \, m_{k,i} + (1 - \rho) \, PF_k$, or more complex functions like combination $f(m_{k,i}, PF_k) = m_{k,i} + \log(1 + PF_k)$.

In the formulae above, $PF_k$ represents the proportional fairness metric for the user device $k$ and it is defined as $PF_k = \dfrac{r_k}{\overline{R}_k}$ where $r_k$ and $\overline{R}_k$ are the instantaneous full-bandwidth throughput and the past average/achieved throughput, respectively, for the user device $k$.

Other proportional fairness metrics that retain the tradeoff between channel-awareness and fairness can be used. For instance, instead of considering the instantaneous full-bandwidth throughput and the past average/achieved throughput, the metric can be defined using channel conditions captured by the instantaneous channel versus the average channel qualities. This eliminates the bias introduced by a proportional fairness metric based on rate and/or throughput.

Various specific embodiments can be implemented to optimize the disclosed scheduling method.

In a first embodiment, retransmissions can be given the highest scheduling priority, meaning that user devices are scheduled for transmissions only after retransmissions are completed. For example, using 5G terminology, HARQ retransmissions can be scheduled immediately, over the PRBs with the highest Channel Quality Indicator (CQI) values. An earliest deadline first criterion can be used to prioritize among user devices with pending HARQ retransmissions. If the PRBs for the current slot are not enough to serve all retransmissions, the user devices with the lower priority are left unscheduled and transmission is not served at all.

In a second embodiment, user devices which generate traffic without quality-of-service requirements (referred to as non-QoS user devices) can be scheduled after retransmission and after user devices with quality-of-service traffic (referred to as QoS user devices). Non-QoS user devices can be served after QoS user devices using the remaining frequency resources on a best effort manner. Example of QoS traffic is traffic relating to multimedia services e.g. extended reality services.

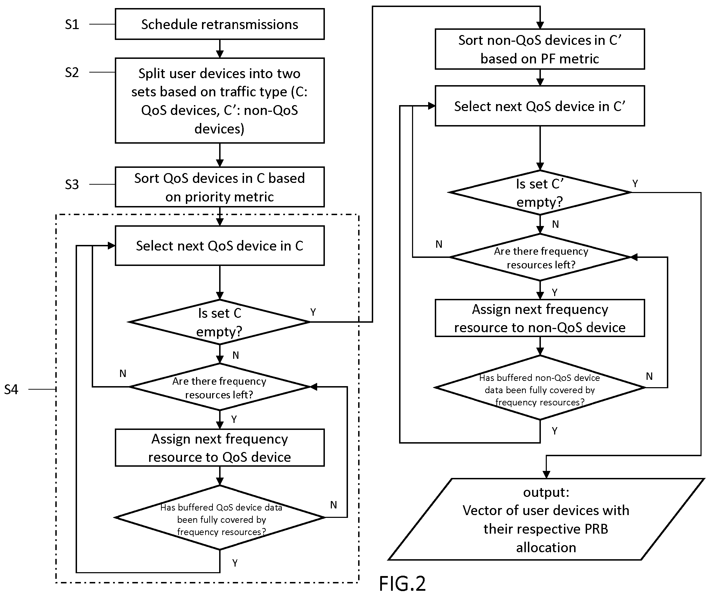

FIG.2 is a flowchart of an exemplary embodiment of a scheduling method as disclosed herein.

The steps depicted in FIG.2 are repeated for each transmission time slot.

At step S1, the scheduler first allocates frequency resources to serve retransmissions. At step S2, the scheduler divides the user devices into two subsets based on the type of traffic. In particular, user devices are split into a first set of QoS user devices (C) and a second set set of non-QoS user devices (C'). The first set of candidate user devices for the purpose of scheduling is the set of QoS devices. Once the scheduler has completed the assignment of frequency resources to the set of QoS devices, it moves to the set of non-QoS devices. The number of selected candidate user devices in the first and second sets is a parameter which can be configured by an operator who is operating the network.

At step S3, a frequency domain policy of the scheduler calculates the priority metric for each QoS user device $k$ and each set of data units $i$. QoS user devices are sorted in non-increasing order according to their respective priority metric.

At step S4, the scheduler selects the next QoS user device in the list according to the priority metric. The selection starts from the top ranked QoS user device. If the set of QoS user devices is not empty, the scheduler first checks if there are still available frequency resources. If the condition is met (i.e., there are frequency resources that have not been assigned yet in this time slot), the scheduler assigns the next available frequency resource to the QoS user device. The scheduler keeps assigning frequency resources to the QoS user device until all buffered data has been covered (i.e., $\sum_{p \in P_k(s)} L_{ksp}$ $\geq \sum_{i \in \mathcal{I}_k(s)} \sum_{j \in \mathcal{I}_i} l_{kij}$, where $\mathcal{I}_k(s)$ is the set of sets of data units of QoS user device $k$ in the buffer at time slot $s$ and $P_k(s)$ is the set of frequency resources assigned to QoS user device $k$ at time slot $s$) or until no more frequency resources are available (i.e., $\sum_{p \in P_k(s)} L_{ksp} <$ $\sum_{i \in \mathcal{I}_k(s)} \sum_{j \in \mathcal{I}_i} l_{kij}$ and $P \setminus U_{k \in C} P_k(s) = \emptyset$). After the QoS user device has been served the list of QoS user devices (C) is updated by removing the QoS user device and the list of available resources is updated by removing the frequency resources that have been assigned to the QoS user device. The update can be executed when the next QoS user device in the first set is selected.

When all QoS user devices have been processed, the scheduler starts scheduling non-QoS user devices using a similar logic but with a proportionate fairness metric instead of the priority metric described above.

The above-described scheduling method can be implemented in a base station of a radio access network to schedule user devices for uplink or downlink transmissions.

Evaluation settings for XR services was defined by 3GPP in TR38.838. A user device is considered satisfied if at least 99% of its PDU sets are successfully transmitted within the given PSDB. The user device satisfaction ratio is calculated as the ratio of the number of satisfied user devices to the total number of user devices present in the radio access network. The above-describe method and apparatus bring a significant improvement to the user satisfaction ratio when the number of user devices increases, compared with known methods. The decrease in the satisfaction ratio is much less in high load conditions.

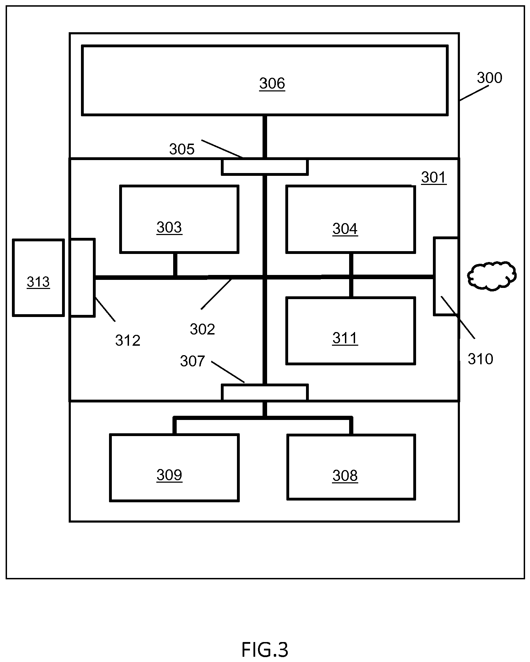

FIG. 3 depicts a high-level block diagram of an apparatus 300 suitable for implementing various aspects of the disclosure. Although illustrated in a single block, in other embodiments the apparatus 300 may also be implemented using parallel and distributed architectures. Thus, for example, various steps such as those illustrated in the method described above by reference to FIG.1 and 2 may be executed using apparatus 300 sequentially, in parallel, or in a different order based on particular implementations. The apparatus disclosed herein, typically a base station in a radio access network, can be implemented in the form of apparatus 300.

According to an exemplary embodiment, depicted in FIG.3, apparatus 300 comprises a printed circuit board 601 on which a communication bus 302 connects a processor 303 (e.g., a central processing unit "CPU"), a random access memory 304, a storage medium 311, possibly an interface 305 for connecting a display 306, a series of connectors 307 for connecting user interface devices or modules such as a mouse or trackpad 308 and a keyboard 309, a wireless network interface 310 and/or a wired network interface 312. Depending on the functionality required, the apparatus may implement only part of the above. Certain modules of FIG.3 may be internal or connected externally, in which case they do not necessarily form integral part of the apparatus itself. E.g. display 306 may be a display that is connected to the apparatus only under specific circumstances, or the apparatus may be controlled through another device with a display, i.e. no specific display 306 and interface 305 are required for such an apparatus. Memory 311 contains software code which, when executed by processor 303, causes the apparatus to perform the scheduling method described herein. Memory 311 can also store the data needed to perform the scheduling method. In an exemplary embodiment, a detachable storage medium 313 such as a USB stick may also be connected. For example, the detachable storage medium 313 can hold the software code to be uploaded to memory 311.

The processor 303 may be any type of processor such as a general purpose central processing unit ("CPU") or a dedicated microprocessor such as an embedded microcontroller or a digital signal processor ("DSP").

In addition, apparatus 300 may also include other components typically found in computing systems, such as an operating system, queue managers, device drivers, or one or more network protocols that are stored in memory 311 and executed by the processor 303.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

**Claims**

1. A scheduling method for use in a radio access network to allocate frequency resources to a user device for the transmission of data units organized in a set of data units, the set of data units being assigned an initial transmission delay budget which decreases over time, the scheduling method comprising at a given transmission time:

   - prioritizing scheduling the user device with the largest portion of data units already successfully transmitted within the set of data units, and
   - prioritizing scheduling the user device which set of data units has the smallest remaining transmission delay budget.

2. A scheduling method as claimed in claim 1, further comprising de-prioritizing scheduling a user device for a given set of data units when there is no remaining transmission delay budget for said given set of data units.

3. A scheduling method as claimed in any of claims 1 or 2, wherein said prioritizing is implemented after retransmission has been scheduled.

4. A scheduling method as claimed in claim 3, further comprising scheduling user devices generating traffic without quality-of-service requirements after said prioritizing.

5. A scheduling method as claimed in any of claims 1 to 4, wherein said prioritizing is based on calculating a priority metric at the given transmission time for user devices in a group of user devices, wherein the priority metric is calculated, for a given set of data units of a given user device, as :

   - a growing function of the number of bits successfully transmitted over the total number of bits to be transmitted in the given set of data units, and
   - a decreasing function of the remaining transmission delay budget assigned to the given set of data units.

**6.** A scheduling method as claimed in claim 5, wherein the priority metric is reduced when scheduling a user device for a given set of data units is de-prioritized.

**7.** A scheduling method as claimed in claim 6, wherein the priority metric is set to zero when priority metric is reduced.

**8.** A scheduling method as claimed in any of claims 1 to 6, wherein the set of data units is also an indicator of whether all data units of the set of data units need to be successfully transmitted for usage of the set of data units by an application at a receiver side, and said indicator is taken into account in said prioritizing.

**9.** An apparatus (300) for use in a radio access network, the apparatus (300) comprising a scheduler for allocating frequency resources to a user device within a group of user devices, for the transmission of data units organized in a set of data units, the set of data units being assigned an initial transmission delay budget which decreases over time, the scheduler being configured to perform, at a given transmission time:

- prioritizing scheduling the user device with the largest portion of data units already successfully transmitted within the set of data units, and
- prioritizing scheduling the user device which set of data units has the smallest remaining transmission delay budget.

**10.** An apparatus (300) as claimed in claim 8, wherein the scheduler is configured to perform de-prioritizing scheduling a user device for a given set of data units when there is no remaining transmission delay budget for said given set of data units.

**11.** An apparatus (300) as claimed in any of claims 8 or 9, wherein said prioritizing is implemented after retransmission has been scheduled.

**12.** An apparatus (300) as claimed in claim 10, configured to schedule user devices generating traffic without quality-of-service requirements after said prioritizing.

**13.** An apparatus (300) as claimed in any of claims 8 to 11, wherein said prioritizing is based on calculating a priority metric at the given transmission time for user devices in a group of user devices, wherein the priority metric is calculated, for a given set of data units of a given user device, as:

- a growing function of the number of bits successfully transmitted over the total number of bits to be transmitted in the given set of data units, and

- a decreasing function of the remaining transmission delay budget assigned to the given set of data units.

**14.** An apparatus (300) as claimed in claim 12, wherein the priority metric is set to zero when scheduling a user device for a given set of data units is de-prioritized.

**15.** An apparatus (300) as claimed in any of claims 8 to 13, wherein the set of data units is also assigned an indicator of whether all data units of the set of data units need to be successfully transmitted for usage of the set of data units by an application at a receiver side, and said indicator is taken into account in said prioritizing.

**16.** A computer program comprising instructions, which, when executed by an apparatus (300), cause the apparatus (300) to implement the method of any of claims 1 to 6.

FIG.1

FIG.2

**S1** Schedule retransmissions

**S2** Split user devices into two sets based on traffic type (C: QoS devices, C': non-QoS devices)

**S3** Sort QoS devices in C based on priority metric

**S4**
Select next QoS device in C

Is set C empty? — Y / N

Are there frequency resources left? — Y / N

Assign next frequency resource to QoS device

Has buffered QoS device data been fully covered by frequency resources? — Y / N

Sort non-QoS devices in C' based on PF metric

Select next QoS device in C'

Is set C' empty? — Y / N

Are there frequency resources left? — Y / N

Assign next frequency resource to non-QoS device

Has buffered non-QoS device data been fully covered by frequency resources? — Y / N

output:
Vector of user devices with their respective PRB allocation

FIG.3

Europäisches
Patentamt

European
Patent Office

Office européen
des brevets

# EUROPEAN SEARCH REPORT

**Application Number**

EP 24 20 2728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LENOVO: "Discussion on PDU sets and data burst awareness in RAN", 3GPP DRAFT; R2-2209937, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. electronic; 20221010 - 20221019 30 September 2022 (2022-09-30), XP052263261, Retrieved from the Internet: URL:https://ftp.3gpp.org/tsg_ran/WG2_RL2/TSGR2_119bis-e/Docs/R2-2209937.zip R2-2209937 XR awareness.docx [retrieved on 2022-09-30] | 1-4, 8-12,15, 16 | INV. H04W72/543 H04W72/563 H04W72/566 |
| A | * page 1, line 16 - line 26 * * page 2, line 7 - line 19 * * page 4, line 26 - page 5, line 15 * ----- -/-- | 5-7,13, 14 | |

**TECHNICAL FIELDS SEARCHED (IPC)**

H04W

The present search report has been drawn up for all claims

| Place of search | Date of completion of the search | Examiner |
|---|---|---|
| The Hague | 29 January 2025 | Atanasovski, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

**Application Number**

EP 24 20 2728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YANHUA LI ET AL: "Discussion on traffic prioritization of XR traffic", 3GPP DRAFT; R2-2211585; TYPE DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Toulouse, FR; 20221114 - 20221118 4 November 2022 (2022-11-04), XP052215690, Retrieved from the Internet: URL:https://www.3gpp.org/ftp/TSG_RAN/WG2_R L2/TSGR2_120/Docs/R2-2211585.zip R2-2211585 Discussion on traffic prioritization of XR traffic.doc [retrieved on 2022-11-04] | 1-4, 8-12,15, 16 | |
| A | * page 1, line 15 - line 20 * * page 2, line 14 - line 22 * ----- | 5-7,13, 14 | |
| A | WO 2023/154845 A1 (INTERDIGITAL PATENT HOLDINGS INC [US]) 17 August 2023 (2023-08-17) ----- | 1-16 | **TECHNICAL FIELDS SEARCHED (IPC)** |

-/--

The present search report has been drawn up for all claims

| Place of search | Date of completion of the search | Examiner |
|---|---|---|
| The Hague | 29 January 2025 | Atanasovski, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 24 20 2728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YEN-CHIH KUO ET AL: "Discussion on XR-specific capacity improvements", 3GPP DRAFT; R2-2301805; TYPE DISCUSSION; NR_XR_ENH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, GR; 20230227 - 20230303 17 February 2023 (2023-02-17), XP052246431, Retrieved from the Internet: URL:https://www.3gpp.org/ftp/TSG_RAN/WG2_RL2/TSGR2_121/Docs/R2-2301805.zip R2-2301805.docx [retrieved on 2023-02-17] ----- | 1-16 | |

TECHNICAL FIELDS SEARCHED (IPC)

The present search report has been drawn up for all claims

| Place of search | Date of completion of the search | Examiner |
|---|---|---|
| The Hague | 29 January 2025 | Atanasovski, Ivan |

EPO FORM 1503 03.82 (P04C01)

EP 4 531 480 A1

**ANNEX TO THE EUROPEAN SEARCH REPORT
ON EUROPEAN PATENT APPLICATION NO.**

EP 24 20 2728

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | Publication date | Patent family member(s) | Publication date |
|---|---|---|---|
| WO 2023154845 A1 | 17-08-2023 | EP 4476953 A1<br>WO 2023154845 A1 | 18-12-2024<br>17-08-2023 |

For more details about this annex : see Official Journal of the European Patent Office, No. 12/82

EPO FORM P0459

15